# EUROPÄISCHE PATENTSCHRIFT

(11) **EP 1 387 440 B1**
(45) Veröffentlichungstag und Bekanntmachung des Hinweises auf die Patenterteilung: **22.02.2012**
(21) Anmeldenummer: 02017124.5
(22) Anmeldetag: 30.07.2002
(51) Int. Cl.: H01R 4/64, B60K 15/00

(54) **Verfahren zum Erden eines ummantelten Metallrohres und Clip zur Durchführung des Verfahrens**
Method for grounding a coated metallic pipe and a clip used for this method
Méthode pour mettre à la masse une conduite métallique revêtue et un clip à utiliser pour cette méthode

(43) Veröffentlichungstag der Anmeldung: 04.02.2004
(73) Patentinhaber: TI Automotive (Fuldabrück) GmbH, 34277 Fuldabrück (DE)
(72) Erfinder: Otto, Torsten, Dr., 34292 Ahnatal (DE); Apel, Kurt, Dipl.-Ing., 36289 Neuenstein (DE)
(74) Vertreter: Rohmann, Michael

(56) Entgegenhaltungen:
- EP-A- 0 744 788
- GB-A- 180 802
- US-A- 4 330 704
- US-A- 5 111 858

## Beschreibung

Die Erfindung betrifft einerseits ein Verfahren zum Erden eines mit einer elektrisch nicht leitenden Kunststoffschicht ummantelten, zum Transport von flüssigen oder gasförmigen Medien, insbesondere Kraftstoffen, in einem Kraftfahrzeug eingesetzten Metallrohres an einem metallischen Teil, insbesondere Chassis des Kraftfahrzeuges, wobei ein elektrisch leitfähiger Clip elektrisch leitend mit dem Metallrohr und anschließend mit dem Teil verbunden wird und andererseits einen Clip zur Durchführung dieses Verfahrens.

Bei einem aus der Praxis bekannten, druckschriftlich nicht näher belegten Verfahren der genannten Art, ist der Clip aus leitfähigem Kunststoff hergestellt und wird die elektrisch leitende Verbindung zwischen dem auf das Metallrohr aufgesteckten Clip und dem Metallrohr dadurch hergestellt, dass die ummantelnde Kunststoffschicht an der betreffenden Stelle entfernt wird. Leider verschlechtert sich dadurch die Korrosions- und Abrasionsbeständigkeit des Metallrohres.

Der Erfindung liegt die Aufgabe zugrunde, im Rahmen der eingangs genannten Maßnahmen eine einwandfreie elektrische Verbindung zwischen Metallrohr und dem anderen Teil (Chassis) ohne Beeinträchtigung der Korrosions- und Abrasionsbeständigkeit zu erreichen.

Hierzu lehrt die Erfindung in verfahrensmäßiger Hinsicht, dass der zumindest teilweise aus einem elektrisch leitfähig gemachten Kunststoff bestehende, innenseitig eine Penetrationserhebungsanordnung aufweisende Clip auf das Metallrohr derart aufgepresst wird, dass die Penetrationserhebungsanordnung durch die Kunststoffschicht hindurch mit der Außenseite des Metallrohres kontaktiert wird, und mit der Kunststoffschicht stoffschlüssig verschweißt wird. Vorzugsweise wird der Clip durch eine Rotations-, Ultraschall-, Vibrations- und/oder Induktionsschweißung mit der Kunststoffschicht verbunden. Die Induktionsschweißung bezieht sich hier auf die weiter unten noch genannte Ausführungsform, bei der der Kunststoff des Clips einen Metallfaserzusatz aufweist. Bei der Induktionsschweißung werden die Metallfasern über Induktion erwärmt und dadurch wird der Kunststoff des Clips angeschmolzen. Fernerhin wird das Metallrohr über Induktion erwärmt und hierdurch wird die Kunststoffschicht auf dem Metallrohr angeschmolzen. Auf diese Weise kann die stoffschlüssige Verschweißung über Induktion erfolgen.

Der durch die Erfindung erreichte Vorteil ist darin zu sehen, dass durch das Aufpressen des Clips vermittels der Penetrationserhebungsanordnung eine einwandfreie elektrische Verbindung zwischen Metallrohr und Clip sowie damit zum anderen Teil hergestellt wird und durch die stoffschlüssige Verschweißung der Kunststoffe das Ganze so hermetisch abgeschlossen wird, dass ein direkter Kontakt von Elektrolytflüssigkeit, z. B. Salzwasser, mit dem Metall verhindert wird und somit Korrosion nicht auftreten kann.

Ein Clip angepasst zur Durchführung des erfindungsgemäßen Verfahrens ist gekennzeichnet durch eine längsgeschlitzte Muffe aus einem leitfähig gemachten Kunststoff mit einem oder mehreren Noppen und/oder Graten als Penetrationserhebungsanordnung. Nach bevorzugter Ausführungsform erfasst die Muffe einen Rohrumschlingungswinkel von mehr als 180°, so dass die Muffe auch im unverschweißten Zustand auf dem Rohr gehalten werden kann. Das Verschweißen des Clips mit der das Metallrohr ummantelnden Kunststoffschicht ist problemlos möglich, wenn der Kunststoff des Clips auf Basis desselben Kunststoffes wie der das Metallrohr ummantelnde Kunststoff hergestellt ist; besonders geeignet ist hier Polyamid-12.

Nach einer weiteren bevorzugten Ausführungsform ist der Kunststoff des Clips durch einen Metallfaserzusatz insbesondere in Form von Stahlfasern, elektrisch leitend gemacht. Der Kunststoff des Clips sollte zur Erhöhung der Festigkeit zusätzlich glasfaserverstärkt sein. Im Übrigen empfiehlt es sich, dass die Noppen und/oder Grate dreieckigen oder trapezförmigen Querschnitt aufweisen.

Im Folgenden wird die Erfindung anhand einer ein Ausführungsbeispiel darstellenden Zeichnung näher erläutert. Es zeigen
- Fig. 1: ein ummanteltes Metallrohr und einen umgebenden Clip in einer Ultraschallschweißvorrichtung und
- Fig. 2: den mit dem Metallrohr verbundenen Clip.

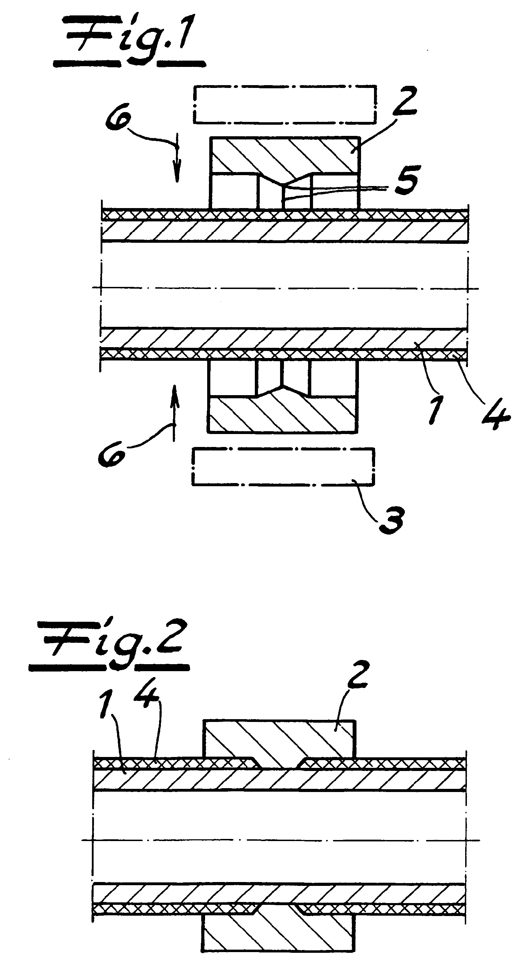

Fig. 1 entnimmt man ein ummanteltes Metallrohr 1, welches in einem Kraftfahrzeug einzusetzen und an einem metallischen Chassis des Kraftfahrzeuges zu erden ist, sowie einen umgebenden Clip 2, der am Metallrohr 1 zu befestigen ist, in einer Vorrichtung 3 zur elektrisch leitenden Verbindung des Clips mit dem Metallrohr 1.

Das Metallrohr 1 dient zum Transport von flüssigen oder gasförmigen Medien, insbesondere Kraftstoff, im Kraftfahrzeug und ist mit einer elektrisch nicht leitenden Kunststoffschicht 4 aus Polyamid-12 ummantelt. Der Clip 2 besteht aus einer längsgeschlitzten Muffe mit einem innenseitig umlaufenden im Querschnitt dreieckigen Grat als Penetrationserhebungsanordnung 5. Die Muffe weist einen Rohrumschlingungswinkel von mehr als 180°, hier von etwa 270° auf. Der Kunststoff des Clips 2 besteht ebenfalls aus Polyamid-12, das durch einen Metallfaserzusatz in Form von Stahlfasern elektrisch leitend gemacht ist und zusätzlich glasfaserverstärkt ist, was im Einzelnen nicht dargestellt ist.

Zum Verbinden von Metallrohr 1 und Clip 2 werden diese beiden Teile wie in Fig. 1 dargestellt in einen Ultraschall-Aktuator 3 eingegeben, woraufhin der Clip 2 durch Aufbringen einer Radialkraft 6 derart auf das ummantelte Metallrohr 1 aufgepresst wird, dass der Grat bzw. die Penetrationserhebungsanordnung 5 durch die Kunststoffschicht 4 hindurch mit der Außenseite des Metallrohres 1 kontaktiert wird. Zugleich mit Aufbringen der Radialkraft und/oder anschließend daran erfolgt eine Ultraschallverschweißung. Der mit dem Metallrohr 1 verbundene Clip 2 ist in Fig. 2 dargestellt. Man erkennt, dass der Grat im Zuge des Aufpressens etwas abgeflacht worden ist. Jedenfalls ist zwischen dem Metallrohr 1 und dem Clip 2 eine einwandfreie, korrosionsfeste Verbindung geschaffen. Nicht dargestellt, dass der Clip 2 abschließend noch mit dem metallischen Chassis des Kraftfahrzeuges elektrisch leitend zu verbinden ist. Das kann z. B. durch eine am Chassis anzuschraubende Fahne, ein Kabel oder auch eine Klemmverbindung erfolgen.

## Patentansprüche

1. Verfahren zum Erden eines mit einer elektrisch nicht leitenden Kunststoffschicht (4) ummantelten, zum Transport von flüssigen oder gasförmigen Medien, insbesondere Kraftstoffen, in einem Kraftfahrzeug eingesetzten Metallrohres (1) an einem metallischen Teil, insbesondere dem Chassis des Kraftfahrzeuges, wobei ein elektrisch leitfähiger Clip (2) elektrisch leitend mit dem Metallrohr (1) und anschließend mit dem Teil verbunden wird, **dadurch gekennzeichnet, dass** der zumindest teilweise aus einem elektrisch leitfähig gemachten Kunststoff bestehende, innenseitig eine Penetrationserhebungsanordnung (5) aufweisende Clip (2) auf das Metallrohr (1) derart aufgepresst wird, dass die Penetrationserhebungsanordnung (5) durch die Kunststoffschicht (4) hindurch mit der Außenseite des Metallrohres (1) kontaktiert wird, und mit der Kunststoffschicht (4) stoffschlüssig verschweißt wird.

2. Verfahren nach Anspruch 1, **dadurch gekennzeichnet, dass** der Clip (2) durch eine Rotations-, Ultraschall-, Vibrations- und/oder Induktionsschweißung mit der Kunststoffschicht (4) verbunden wird.

3. Clip angepasst zur Durchführung des Verfahrens nach Anspruch 1 oder 2, **gekennzeichnet durch** eine längsgeschlitzte Muffe (2) aus einem elektrisch leitfähig gemachten Kunststoff mit einem oder mehreren Noppen und/oder Graten als Penetrationserhebungsanordnung (5).

4. Clip nach Anspruch 3, **dadurch gekennzeichnet, dass** die Muffe (2) einen Rohrumschlingungswinkel von mehr als 180° erfasst.

5. Clip nach Anspruch 3 oder 4, **dadurch gekennzeichnet, dass** der Kunststoff des Clips (2) denselben Kunststoff wie der das Metallrohr (1) ummantelnde Kunststoff als Basis aufweist.

6. Clip nach einem der Ansprüche 3 bis 5, **dadurch gekennzeichnet, dass** der Kunststoff des Clips (2) durch einen Metallfaserzusatz elektrisch leitend gemacht ist.

7. Clip nach Anspruch 6, **dadurch gekennzeichnet, dass** der Metallfaserzusatz aus Stahlfasern besteht.

8. Clip nach einem der Ansprüche 3 bis 7, **dadurch gekennzeichnet, dass** der Kunststoff des Clips (2) zusätzlich glasfaserverstärkt ist.

9. Clip nach einem der Ansprüche 3 bis 8, **dadurch gekennzeichnet, dass** die Noppen und/oder Grate dreieckigen oder trapezförmigen Querschnitt aufweisen.

## Claims

1. A method for earthing a metal tube (1), which is sheathed with an electrically non-conductive plastic layer (4) and is used for transporting liquid or gaseous media, in particular fuels, in a motor vehicle, to a metallic part, in particular the chassis of the motor vehicle, wherein an electrically conductive clip (2) is connected in an electrically conductive manner to the metal tube (1) and then to the part,
**characterised in that**
the clip (2), which consists at least partially of a plastic which has been made electrically conductive and has a raised penetration arrangement (5) on the inside, is pressed onto the metal tube (1) in such a manner that the raised penetration arrangement (5) makes contact through the plastic layer (4) with the outer side of the metal tube (1), and is welded cohesively with the plastic layer (4).

2. The method according to Claim 1,
**characterised in that**
the clip (2) is connected to the plastic layer (4) by means of a rotary, ultrasonic, vibration and/or induction welding process.

3. A clip adapted for carrying out the method according to Claim 1 or 2,
**characterised by** a longitudinally slotted sleeve (2) consisting of a plastic which has been made electrically conductive, with one or a plurality of knobs and/or ridges as a raised penetration arrangement (5).

4. The clip according to Claim 3,
**characterised in that**
the sleeve (2) encloses a tube wrap angle of more than 180°.

5. The clip according to Claim 3 or 4,
**characterised in that**
the plastic of the clip (2) is based on the same plastic as the plastic sheathing the metal tube (1).

6. The clip according to one of Claims 3 to 5,
**characterised in that**
the plastic of the clip (2) is made electrically conductive by a metal fibre additive.

7. The clip according to Claim 6,
**characterised in that**
the metal fibre additive consists of steel fibres.

8. The clip according to one of Claims 3 to 7,
**characterised in that**
the plastic of the clip (2) is also glass-fibre-reinforced.

9. The clip according to one of Claims 3 to 8,
**characterised in that**
the knobs and/or ridges have a triangular or trapezoidal cross section.

## Revendications

1. Procédé pour mettre à la terre un tube métallique (1) enveloppé avec une couche plastique (4) non électroconductrice, utilisé sur un véhicule, pour le transport de milieux fluides ou gazeux, en particulier des carburants, sur une partie métallique, en particulier le châssis du véhicule, un clip (2) électriquement conducteur étant relié de façon électroconductrice au tube métallique (1) et ensuite à la pièce, **caractérisé en ce que** le clip (2) à base au moins partiellement d'un plastique rendu électroconducteur, présentant côté intérieur un dispositif d'amélioration de pénétration (5), est engagé par pression sur le tube métallique (1), de telle sorte que le dispositif d'amélioration de pénétration (5) est mis en contact à travers la couche plastique (4) avec le côté extérieur du tube métallique (1), et est soudé par complémentarité de matière avec la couche plastique (4).

2. Procédé selon la revendication 1, **caractérisé en ce que** le clip (2) est relié par un soudage par rotation, ultrasons, vibration et/ou induction à la couche plastique (4).

3. Clip adapté pour la mise en oeuvre du procédé selon la revendication 1 ou 2, **caractérisé par** un manchon (2) fendu dans la longueur à base d'un plastique rendu électroconducteur avec une ou plusieurs nopes et/ou arêtes comme dispositif d'amélioration de pénétration (5).

4. Clip selon la revendication 3, **caractérisé en ce que** le manchon (2) comprend un angle d'enroulement de tube supérieur à 180°.

5. Clip selon la revendication 3 ou 4, **caractérisé en ce que** le plastique du clip (2) présente comme base le même plastique que le plastique enveloppant le tube métallique (1).

6. Clip selon l'une des revendications 3 à 5, **caractérisé en ce que** le plastique du clip (2) est rendu électroconducteur par un ajout de fibre de métal.

7. Clip selon la revendication 6, **caractérisé en ce que** l'ajout de fibre de métal est à base de fibres d'acier.

8. Clip selon l'une des revendications 3 à 7, **caractérisé en ce que** le plastique du clip (2) est en supplément renforcé de fibre de verre.

9. Clip selon l'une des revendications 3 à 8, **caractérisé en ce que** les nopes et/ou les arêtes présentent une section triangulaire ou trapézoïdale.
